# EUROPÄISCHE PATENTSCHRIFT

(11) **EP 4 426 573 B1**
(45) Veröffentlichungstag und Bekanntmachung des Hinweises auf die Patenterteilung: **02.04.2025**
(21) Anmeldenummer: 23706532.1
(22) Anmeldetag: 03.02.2023
(51) Int. Cl.: F16J 15/02, C22F 1/047, B21D 28/26, B21D 11/10, B60J 10/32, B60J 10/80, F16J 15/12, B29C 48/154, B29C 48/285, C22C 21/06, B60J 10/18, B29K 21/00, B29K 705/02, B29C 48/12

(54) **VERSTÄRKUNGSBAND FÜR EINEN FORMKÖRPER AUS EINER SPRITZFÄHIGEN FORMMASSE SOWIE FORMKÖRPER MIT EINEM DERARTIGEN VERSTÄRKUNGSBAND**
REINFORCING STRIP FOR A MOULDED BODY MADE OF AN INJECTABLE MOULDING COMPOUND, AND MOULDED BODY HAVING SUCH A REINFORCEMENT STRIP
BANDE DE RENFORCEMENT POUR UN CORPS MOULÉ OBTENU À PARTIR D'UNE MATIÈRE APTE À ÊTRE MOULÉE PAR INJECTION AINSI QUE CORPS MOULÉ DOTÉ D'UNE TELLE BANDE DE RENFORCEMENT

(30) Priorität: 03.02.2022 DE 202022100638 U
(43) Veröffentlichungstag der Anmeldung: 11.09.2024
(73) Patentinhaber: STG Stanztechnik GmbH & Co.KG, 84032 Altdorf (DE)
(72) Erfinder: KÖHLER, Robert, 85368 Moosburg (DE)
(74) Vertreter: Flügel Preissner Schober Seidel
(86) Internationale Anmeldenummer: PCT/EP2023/052652
(87) Internationale Veröffentlichungsnummer: WO 2023/148313

(56) Entgegenhaltungen:
- DE-U1- 202021 104 735
- HURD TIM J ET AL: "Al-Mg sheet for automotive and architectural applications. EN-AW 5xxx processing, microstructure, simulation and property control", 1 January 2006, VIRTUAL FABRICATION OF ALUMINUM PRODUCTS, WILEY-VCH, DE, PAGE(S) 37 - 50, ISBN: 978-3-527-31363-1, XP009180649

## Beschreibung

Die vorliegende Erfindung betrifft ein Verstärkungsband für einen Formkörper aus einer spritzfähigen Formmasse, aufweisend einen bandförmigen Grundkörper aus einer Aluminium-Magnesium-Legierung gemäß der Legierungsgruppe EN AW-5xxx. Des Weiteren betrifft die Erfindung einen Formkörper mit einem derartigen Verstärkungsband.

Verstärkungsbänder der eingangs genannten Art werden zur Armierung eines Formkörpers aus einer spritzfähigen Formmasse, wie beispielsweise eines Dichtungsstranges aus elastomeren Werkstoff, eingesetzt. Derartige Dichtungsstränge werden zum Abdichten von Öffnungen eines Fahrzeugs, wie beispielsweise einer Türöffnung, einer Fensteröffnung oder einer Heckklappenöffnung, verwendet.

Zur Befestigung des Dichtungsstranges ist die Öffnung mit einem die Öffnung umlaufenden Flansch versehen, auf welchen der Dichtungsstrang aufgesteckt beziehungsweise geklemmt wird. Hierzu ist das Verstärkungsband zu einem U-Profil umgeformt. Um ein Abziehen von dem Flansch zu verhindern, ist es erforderlich, dass das Verstärkungsband eine hohe Klemmkraft aufweist.

Bei der Weiterverarbeitung des zu einem U-Profil umgeformten Verstärkungsbandes zu einem Dichtungsstrang wird in einem anschließenden Extrusionsprozess das Verstärkungsband mit einer spritzfähigen Formmasse, wie beispielsweise Kunststoff und/oder Elastomer, ummantelt.

Um ein Durchdringen der spritzfähigen Formmasse zu ermöglichen, werden die Verstärkungsbänder mit Schlitzen versehen, welche zudem das Gewicht der Verstärkungsbänder reduzieren. Die Schlitze werden in einem kontinuierlichen Herstellungsverfahren durch rotatives Schneiden oder Stanzen in das Verstärkungs-Deutschland
band eingebracht und durch Recken, wie beispielsweise Walzstrecken, anschließend aufgeweitet.

Da während der Extrusion hohe Kräfte in Längsrichtung auf das Verstärkungsbandes wirken, muss das Verstärkungsband neben der hohen Klemmkraft hohe Festigkeitskennwerte aufweisen.

Um diese Anforderungen zu erfüllen, sind die aus DE 100 33 454 A1 und
DE 10 2016 005 074 A1 bekannten Verstärkungsbänder aus Stahl. Im Zuge der steten Gewichtsreduktion im Fahrzeugbau werden zunehmend Verstärkungsbänder aus Aluminium-Magnesium-Legierungen eingesetzt.

Des Weiteren geht aus DE 20 201 104 735 U1 ein Metallband als Einlage für Zier- oder Dichtstreifen oder als Kantenschutz hervor, welches insbesondere mit geschnittenen und/oder gestanzten Durchbrüchen versehen ist, wobei das Metallband aus mikrolegiertem Stahl oder Mehrphasenstahl besteht.

Zudem zeigt HURD TIM J ET AL: "Al-Mg sheet for automotive and architectural applications. EN-AW 5xxx processing, microstructure, simulation and property control", 1. Januar 2006 (2006-01-01), VIRTUAL FABRICATION OF ALUMINUM PRODUCTS, WILEY-VCH, OE, PAGE(S) 37-50, XP009180649, ISBN: 978-3-527-31363-1 den Einsatz von Aluminium-Magnesium-Bändern für Automobile und/oder architektonische Anwendungen.

Der Erfindung liegt die Aufgabe zugrunde, ein Verstärkungsband und einen Formkörper zu schaffen, die einen reduzierten Materialeinsatz und ein geringes Gewicht aufweisen.

Zur Lösung der Aufgabe wird ein Verstärkungsband mit den Merkmalen des Anspruchs 1 und ein Formkörper mit den Merkmalen des Anspruchs 14 vorgeschlagen.

Vorteilhafte Ausgestaltungen des Verstärkungsbands und des Formkörpers sind Gegenstand der jeweils abhängigen Ansprüche.

Gemäß einem Aspekt wird ein Verstärkungsband für einen Formkörper aus einer spritzfähigen Formmasse vorgeschlagen. Das Verstärkungsband weist einen bandförmigen Grundkörper aus einer Aluminium-Magnesium-Legierung gemäß Legierungsgruppe EN AW-5xxx auf, wobei die Aluminium-Magnesium-Legierung des bandförmigen Grundkörpers eine Streckgrenze und/oder eine Zugfestigkeit aufweist, die höher und/oder niedriger als die Streckgrenze und/oder die Zugfestigkeit einer korrespondierenden Aluminium-Magnesium-Legierung gemäß der Legierungsgruppe EN AW-5xxx ist.

Durch die Erhöhung und/oder Reduzierung der Streckgrenze und/oder der Zugfestigkeit kann das Verstärkungsband in der Festigkeit erhöht werden. Dadurch kann die Banddicke und somit der Materialeinsatz reduziert und gleichzeitig das Gewicht des Verstärkungsbandes verringert werden.

Das Verstärkungsband kann auch als Gerüstband, Einlegeband oder Trägerband bezeichnet werden.

Der Formkörper kann ein Dichtungsstrang für ein Fahrzeug, ein Zierstrang oder ein Strang zum Schutz von Kanten sein. Die spritzfähige Formmasse kann ein Kunststoff und/oder ein elastomerer Werkstoff sein.

Die Legierungsgruppe EN AW-5xxx bezieht sich auf eine genormte Aluminium-Magnesium-Legierungs-Sorte (AIMg-Legierung), deren Hauptlegierungsbestandteil Magnesium ist. Die chemischen Zusammensetzungen und die genormten Bezeichnungen der Legierungen der Legierungsgruppe EN AW-5xxx sind in der DIN EN 573-3 beschrieben. Insbesondere sind die chemischen Zusammensetzungen und die genormten Bezeichnungen der Legierungen der Legierungsgruppe ENAW-5xxx in der DIN EN 573-3:2022-09 (Aluminium und Aluminiumlegierungen - Chemische Zusammensetzung und Form von Halbzeug - Teil 3: Chemische Zusammensetzung und Erzeugnisformen; Deutsche Fassung EN 573-3: 2019+A1:2022) beschrieben. Weiterhin insbesondere sind die chemischen Zusammensetzungen und die genormten Bezeichnungen der Legierungen der Legierungsgruppe ENAW-5xxx auf Seite 13 bis 15 der DIN EN 573-3: 2022-09 beschrieben. Die Legierungsgruppe EN AW-5xxx kann auch als Serie 5xxx bezeichnet werden.

Der Magnesiumanteil der Aluminium-Magnesium-Legierung gemäß Legierungsgruppe EN AW-5xxx kann zwischen ca. 0,2 % und ca. 5,6 % betragen. Darüber hinaus kann die Legierung noch weitere Bestandteile, wie beispielsweise Silizium (Si), Eisen (Fe), Kupfer (Cu), Mangan (Mn), Magnesium (Mg), Chrom (Cr), Titan (Ti) und/oder Zink (Zn), enthalten.

In einer vorteilhaften Ausgestaltung wird ein Verstärkungsband für einen Formkörper aus einer spritzfähigen Formmasse vorgeschlagen. Das Verstärkungsband weist einen bandförmigen Grundkörper aus einer Aluminium-Magnesium-Legierung gemäß EN AW-5754 auf, wobei die Aluminium-Magnesium-Legierung des bandförmigen Grundkörpers eine Streckgrenze und/oder eine Zugfestigkeit aufweist, die höher und/oder niedriger als die Streckgrenze und/oder die Zugfestigkeit einer korrespondierenden Aluminium-Magnesium-Legierung gemäß EN AW-5754 ist.

In einer vorteilhaften Ausgestaltung ist die Streckgrenze und/oder die Zugfestigkeit der Aluminium-Magnesium-Legierung des bandförmigen Grundkörpers zwischen 5% und 50% höher und/oder niedriger als die Streckgrenze und/oder die Zugfestigkeit einer korrespondierenden Aluminium-Magnesium-Legierung gemäß der Legierungsgruppe EN AW-5xxx. So kann die Streckgrenze und/oder Zugfestigkeit der Aluminium-Magnesium-Legierung des bandförmigen Grundkörpers bis zu ca. 40 N/mm² höher und/oder niedriger als die Streckgrenze und/oder die Zugfestigkeit einer korrespondierenden Aluminium-Magnesium-Legierung gemäß der Legierungsgruppe EN AW-5xxx sein.

Die mechanischen Eigenschaften der Legierungsgruppe ENAW-5xxx sind in DIN EN 485-2 und in DIN EN 1396 beschrieben Insbesondere sind die mechanischen Eigenschaften der Legierungsgruppe ENAW-5xxx in DIN EN 485-2: 2018-12 (Aluminium und Aluminiumlegierungen - Bänder, Bleche und Platten - Teil 2: Mechanische Eigenschaften; Deutsche Fassung EN 485-2: 2016+A12018) und in DIN EN 1396: 2015-06 (Aluminium und Aluminiumlegierungen - Bandbeschichtete Bleche und Bänder für allgemeine Anwendungen - Spezifikationen: ; Deutsche Fassung EN 1396: 2015) beschrieben. In der DIN EN 485-2 und der DIN EN 1396 erfolgt die Zuordnung zu den Legierungen der Legierungsgruppe ENAW-5xxx zu Werkstoffzuständen, die in DIN EN 515, insbesondere in DIN EN 515: 2017-05 (Aluminium und Aluminiumlegierungen - Halbzeug - Bezeichnungen der Werkstoffzustände; Deutsche Fassung EN 515:2017) beschrieben sind. In der nachfolgenden Tabelle sind die in den Europäischen Normen gebräuchlichsten Werkstoffzustände sinngemäß aufgeführt, wobei die Auflistung nicht als abschließend anzusehen ist, sondern alle in der DIN EN 515 aufgelisteten Werkstoffzustände werden in die vorliegende Erfindung mit eingeschlossen:

| Zustand | Bedeutung |
|---|---|
| H12 | Kaltverfestigt - 1/4 hart |
| H14 | Kaltverfestigt - 1/2 hart |
| H16 | Kaltverfestigt - 3/4 hart |
| H18 | Kaltverfestigt - 4/4 hart (voll durchgehärtet) |
| H19 | Kaltverfestigt - extrahart |
| Hxx4 | Gilt für dessinierte oder geprägte Bleche oder Bänder, die aus dem entsprechenden Hxx-Zustand hergestellt sind |
| Hxx5 | Kaltverfestigt - Gilt für geschweißte Rohre |
| H111 bzw. 0/H111 | Geglüht und durch anschließende Arbeitsgänge, zum Beispiel Recken oder Richten, geringfügig kaltverfestigt (weniger als H11) |
| H112 | Durch Warmumformung oder eine begrenzte Kaltumformung geringfügig kaltverfestigt. (mit festgelegten Grenzwerten der mechanischen Eigenschaften) |
| H116 | Gilt für Aluminium-Magnesium-Legierungen mit einem Magnesiumanteil >= 4 %, für die die Grenzwerte der mechanischen Eigenschaften und die Beständigkeit gegen Schichtkorrosion festgelegt sind. |
| H22 | Kaltverfestigt und rückgeglüht - 1/4 hart |
| H24 | Kaltverfestigt und rückgeglüht - 1/2 hart |
| H26 | Kaltverfestigt und rückgeglüht - 3/4 hart |
| H28 | Kaltverfestigt und rückgeglüht - 4/4 hart (voll durchgehärtet) |
| H32 | Kaltverfestigt und stabilisiert - 1/4 hart |
| H34 | Kaltverfestigt und stabilisiert - 1/2 hart |
| H36 | Kaltverfestigt und stabilisiert - 3/4 hart |
| H38 | Kaltverfestigt und stabilisiert - 4/4 hart (voll durchgehärtet) |
| H42 | Kaltverfestigt und lackiert oder beschichtet - 1/4 hart |
| H44 | Kaltverfestigt und lackiert oder beschichtet - 1/2 hart |
| H46 | Kaltverfestigt und lackiert oder beschichtet - 3/4 hart |
| H48 | Kaltverfestigt und lackiert oder beschichtet - 4/4 hart (voll durchgehärtet) |

Die in der DIN EN 515 Tabelle aufgelisteten Werkstoffzustände werden im Folgenden mit Hxy benannt, wobei x für die erste Zahl beziehungsweise ersten beiden Zahlen und y für die zweite Zahl beziehungsweise die dritte Zahl steht.

Vorteilhaft kann die Streckgrenze und/oder die Zugfestigkeit einer Aluminium-Magnesium-Legierung gemäß der Legierungsgruppe EN AW-5xxx in einem Zustand Hxy im Vergleich zu der korrespondierenden Aluminium-Magnesium-Legierung gemäß der Legierungsgruppe EN AW-5xxx im Zustand Hxy, insbesondere in dem gleichen Zustand Hxy, erhöht und/oder verringert sein, indem die Aluminium-Magnesium-Legierung gemäß der Legierungsgruppe EN AW-5xxx behandelt, beispielsweise gewalzt, geglüht und/oder wärmebehandelt, wird.

In einer vorteilhaften Ausgestaltung weist die Aluminium-Magnesium-Legierung des Grundkörpers in einem Zustand Hxy eine höhere Zugfestigkeit als eine korrespondierende Aluminium-Magnesium-Legierung gemäß der Legierungsgruppe EN AW-5xxx im Zustand Hxy, insbesondere in dem gleichen Zustand Hxy, auf. Dadurch ist es möglich, das Verstärkungsband im Vergleich zu einem Verstärkungsband aus einer Aluminium-Magnesium-Legierung gemäß der Legierungsgruppe EN AW-5xxx im Zustand Hxy stabiler auszuführen. Dadurch kann die Banddicke reduziert und das Gewicht des Verstärkungsbandes reduziert werden.

Beispielsweise weist eine behandelte Aluminium-Magnesium-Legierung EN AW-5754 im Werkstoffzustand H22 und mit einer Materialdicke von 0,8 mm eine Zugfestigkeit Rm von 271 bis 310 MPa und eine Streckgrenze Rp0,2 von min. 130 MPa und eine Bruchdehnung A50 von min. 8 % auf. Im Vergleich dazu weist eine Aluminium-Magnesium-Legierung EN AW-5754 im Werkstoffzustand H22 und mit einer Materialdicke von 0,8 mm nach EN 485-2 eine Zugfestigkeit Rm von 220 bis 270 MPa auf.

Beispielsweise weist eine behandelte Aluminium-Magnesium-Legierung EN AW-5454 im Werkstoffzustand 0/H111 und mit einer Materialdicke von 0,80 mm eine Zugfestigkeit Rm von 276 bis 305 MPa, eine Streckgrenze Rp0,2 von min. 85 MPa und eine Bruchdehnung A50 von min. 13% auf. Im Vergleich dazu weist eine Aluminium-Magnesium-Legierung EN AW-5454 im Werkstoffzustand 0/H111 und mit einer Materialdicke von 0,8 mm nach EN 485-2 eine Zugfestigkeit Rm von 215 bis 275 MPa auf.

Vorteilhaft beträgt die Zugfestigkeit der Aluminium-Magnesium-Legierung im Zustand Hxy des erfindungsgemäßen Verstärkungsbandes bis zu 40 N/mm² mehr als eine korrespondierende Aluminium-Magnesium-Legierung gemäß der Legierungsgruppe EN AW-5xxx im Zustand Hxy.

In einer vorteilhaften Ausgestaltung weist die Aluminium-Magnesium-Legierung des Grundkörpers in einem Zustand Hxy eine niedrigere Streckgrenze als eine korrespondierende Aluminium-Magnesium-Legierung gemäß der Legierungsgruppe EN AW-5xxx im Zustand Hxy, insbesondere in dem gleichen Zustand Hxy, auf. Durch die im Vergleich zu einer bekannten Aluminium-Magnesium-Legierung gemäß der Legierungsgruppe EN AW-5xxx verringerte Streckgrenze kann das erfindungsgemäße Verstärkungsband weiter gereckt, das heißt, in die Länge gezogen werden. Dadurch kann der Materialeinsatz reduziert und das Gewicht des Verstärkungsbandes reduziert werden. Vorteilhaft beträgt die Streckgrenze der Aluminium-Magnesium-Legierung im Zustand Hxy des erfindungsgemäßen Verstärkungsbandes bis zu 40 N/mm² weniger als eine korrespondierende Aluminium-Magnesium-Legierung gemäß der Legierungsgruppe EN AW-5xxx im Zustand Hxy.

Beispielsweise weist eine behandelte Aluminium-Magnesium-Legierung EN AW-5754 im Werkstoffzustand H22 und mit einer Materialdicke von 0,6 mm eine Zugfestigkeit Rm von 220 bis 270 MPa und eine Streckgrenze Rp0,2 von 90 bis 129 MPa und eine Bruchdehnung A50 von min. 10 % auf. Im Vergleich dazu weist eine Aluminium-Magnesium-Legierung EN AW-5754 im Werkstoffzustand H22 und mit einer Materialdicke von 0,6 mm nach EN 485-2 eine Streckgrenze Rp02 von mindestens 130 MPa und eine Bruchdehnung A50 von min. 8% auf.

Durch die Reduzierung der Streckgrenze beim behandelten Werkstoff kann der Mindestwert für die Bruchdehnung erhöht werden. Dadurch erhöht sich die Umformbarkeit des Verstärkungsbandes. Es kann beispielsweise weiter gereckt werden und ist dadurch stabiler in der Herstellung und bei der Weiterverarbeitung.

In einer vorteilhaften Ausgestaltung ist die Aluminium-Magnesium-Legierung gewalzt, geglüht oder wärmebehandelt. Dadurch wird die Streckgrenze und/oder die Zugfestigkeit erhöht und/oder verringert.

In einer vorteilhaften Ausgestaltung weist der Grundkörper eine Dicke zwischen 0,46 mm und 0,84 mm, insbesondere zwischen 0,5 mm und 0,8 mm, weiterhin insbesondere zwischen 0,57 mm und 0,77 mm, auf. Aufgrund der geringen Dicke weist das Verstärkungsband ein geringes Gewicht auf.

In einer vorteilhaften Ausgestaltung weist der Grundkörper eine Vielzahl an aufgeweiteten Randschlitzen, die sich von Randabschnitten des Grundkörpers quer zu seiner Längsrichtung nach innen erstrecken, und eine Vielzahl an aufgeweiteten Innenschlitzen, die in einem zwischen den Randabschnitten des Grundkörpers befindlichen Innenabschnitt angeordnet sind, auf. Die Randschlitze können nach innen keilförmig oder spitz auslaufen. Vorteilhaft sind die Randschlitze bandau-ßenseitig offen, das heißt, die Randschlitze weisen an den Rändern des Grundkörpers keine feste Umrandung auf. Vorteilhaft liegen sich jeweils zwei Randschlitze paarweise gegenüber. Alternativ können sich die Randschlitze versetzt zueinander gegenüberliegen. Vorteilhaft sind die Randschlitze nach innen keilförmig ausgebildet. Vorteilhaft sind die Innenschlitze als Öffnungen mit einer festen Umrandung ausgebildet. Die Öffnungen können rautenförmig ausgebildet sein.

Vorteilhaft entstehen durch die Randschlitze Lamellen, welche im umgeformten Zustand des Verstärkungsbandes einen Flansch einer Fahrzeugöffnung umgreifen und die Klemmkraft aufbringen. Die Lamellen können sich unmittelbar gegenüberliegen oder versetzt zueinander gegenüberliegen.

Vorteilhaft werden die Randschlitze und/oder die Innenschlitze durch rotatives Schneiden oder Stanzen in den Grundkörper eingebracht, und durch anschließendes Recken, wie beispielsweise Walzstrecken, des Grundkörpers werden die Randschlitze und/oder die Innenschlitze aufgeweitet.

In einer vorteilhaften Ausgestaltung beträgt eine Öffnungsweite der Randschlitze und/oder der Innenschlitze zwischen 0,5 mm und 4 mm. Weiterhin vorteilhaft beträgt eine Öffnungsweite der Randschlitze und/oder der Innenschlitze zwischen 1 mm und 3,5 mm.

In einer vorteilhaften Ausgestaltung weisen die Randschlitze eine Länge auf, die zwischen einem Drittel und der Hälfte einer Breite des Verstärkungsbandes entspricht, und die Innenschlitze weisen eine Länge auf, die zwischen 1/8 und 2/3 der Breite des Verstärkungsbandes entspricht.

In einer vorteilhaften Ausgestaltung sind die Innenschlitze aus wenigstens einer ersten Reihe mit einer ersten Kontur und aus wenigstens einer zweiten Reihe mit einer zweiten Kontur gebildet. Weiterhin vorteilhaft sind die Innenschlitze aus zwei ersten Reihen mit einer ersten Kontur und aus einer zweiten Reihe mit einer zweiten Kontur gebildet. In diesem Fall können die Randschlitze eine V-Form aufweisen, wobei die Randschlitze vorteilhaft spitz nach innen zulaufen.

Vorteilhaft sind die Innenschlitze der ersten Reihe länger als die Innenschlitze der zweiten Reihe. Die Randschlitze können eine Länge aufweisen, die ca. 1/3 der Breite des Verstärkungsbandes entspricht. Die Innenschlitze der ersten Reihe können eine Länge aufweisen, die ca. 1/3 der Breite des Verstärkungsbandes entspricht und die Innenschlitze der zweiten Reihe können eine Länge aufweisen, die ca. 1/8 der Breite des Verstärkungsbandes entspricht.

Die erste Kontur kann näherungsweise eine Tropfenform aufweisen und die zweite Kontur kann näherungsweise die Form eines Hexaeders aufweisen.

In einer vorteilhaften Ausgestaltung ist abwechselnd in Längsrichtung des Verstärkungsbandes zwischen zwei Randschlitzen jeweils ein Innenschlitz der zweiten Reihe angeordnet und zwischen jeweils zwei aufeinanderfolgenden Paaren von Randschlitzen sind zwei sich gegenüberliegende Innenschlitze der ersten Reihe angeordnet.

In einer vorteilhaften Ausgestaltung überlappen sich die Randschlitze und die Innenschlitze quer zur Längsrichtung, wobei die sich überlappenden Randschlitze und Innenschlitze durch Stege voneinander getrennt sind, wobei die Stege eine Breite zwischen 1 mm und 3 mm aufweisen.

In einer vorteilhaften Ausgestaltung sind abwechselnd in Längsrichtung des Verstärkungsbandes zwei Randschlitze einander gegenüberliegend und in Längsrichtung versetzt dazu ein Innenschlitz angeordnet.

In einer vorteilhaften Ausgestaltung sind abwechselnd in Längsrichtung des Verstärkungsbandes ein Randschlitz eines ersten Randabschnittes und ein Innenschlitz einander gegenüberliegend und in Längsrichtung versetzt dazu ein Randschlitz eines zweiten Randabschnittes und ein Innenschlitz einander gegenüberliegend angeordnet.

In einer vorteilhaften Ausgestaltung sind abwechselnd in Längsrichtung des Verstärkungsbandes zwischen zwei sich paarweise gegenüberliegenden Randschlitzen ein Innenschlitz und in Längsrichtung versetzt dazu zwei sich gegenüberliegende Innenschlitze angeordnet.

In einer vorteilhaften Ausgestaltung ist eine Dicke der Randabschnitte größer als eine Dicke des Innenabschnittes. Durch die Verdickung der Ränder wird bei der Verwendung des Verstärkungsbandes in einem Formkörper eine Beschädigung der das Verstärkungsband umhüllenden Formmasse verhindert. Dadurch kann bei einem Einsatz eines mit dem Verstärkungsband versehenen Dichtungsstrangs als Türdichtung eine Zerstörung eines Kopf-Airbags vermieden werden.

Gemäß einem weiteren Aspekt wird ein Formkörper aus einer spritzfähigen Formmasse mit einem erfindungsgemäßen Verstärkungsband vorgeschlagen.

In einer vorteilhaften Ausgestaltung ist der Formkörper aus einem Kunststoff und/oder einem Elastomermaterial. Der Formkörper kann durch Spritzgießen oder Extrusion hergestellt werden. Hierzu kann das Verstärkungsband zunächst zu einem U-förmigen Profil umgeformt, insbesondere gebogen werden, und anschließend kann das Verstärkungsband mit einem Kunststoff oder einem Elastomermaterial umspritzt werden.

In einer vorteilhaften Ausgestaltung ist das Verstärkungsband zu einem V-förmigen Profil oder einem U-förmigen Profil umgeformt. Das U-förmige Profil kann zur Befestigung des Formkörpers auf einen Flansch, beispielsweise auf einen Flansch einer Fahrzeugöffnung, aufgesteckt beziehungsweise aufgeklemmt werden.

In einer vorteilhaften Ausgestaltung ist der Formkörper ein Dichtungsstrang für ein Fahrzeug. Der Dichtungsstrang kann eine Dichtlippe und einen Aufsteckschacht aufweisen. Vorteilhaft ist das zu einem V-Profil oder einem U-Profil umgeformte Verstärkungsband in dem Aufnahmeschacht eingebettet.

Nachfolgend werden Verstärkungsbänder und Dichtungsstränge sowie weitere Merkmale und Vorteile anhand von Ausführungsbeispielen näher erläutert, die in den Figuren schematisch dargestellt sind. Hierbei zeigen:
- Fig. 1: eine Draufsicht auf ein Verstärkungsband gemäß einer ersten Ausführungsform;
- Fig. 2: eine Vorderansicht des Verstärkungsbandes von Fig. 1;
- Fig. 3: eine perspektivische Ansicht des zu einem U-Profil umgeformten Verstärkungsbandes von Fig. 1;
- Fig. 4: eine perspektivische Darstellung eines Dichtungsstrangs mit dem zu einem U-Profil umgeformten Verstärkungsband von Fig. 2;
- Fig. 5: eine Vorderansicht eines Verstärkungsbandes gemäß einer zweiten Ausführungsform;
- Fig. 6: eine perspektivische Ansicht des zu einem U-Profil umgeformten Verstärkungsbandes gemäß der zweiten Ausführungsform;
- Fig. 7: eine perspektivische Darstellung eines Dichtungsstrangs mit dem zu einem U-Profil umgeformten Verstärkungsband von Fig. 6;
- Fig. 8: eine Draufsicht auf ein Verstärkungsband gemäß einer dritten Ausführungsform;
- Fig. 9: eine Vorderansicht des Verstärkungsbandes von Fig. 8;
- Fig. 10: eine perspektivische Ansicht des zu einem U-Profil umgeformten Verstärkungsbands von Fig. 8;
- Fig. 11: eine Draufsicht auf ein Verstärkungsband gemäß einer vierten Ausführungsform;
- Fig. 12: eine Vorderansicht des Verstärkungsbandes von Fig. 11;
- Fig. 13: eine perspektivische Ansicht des zu einem U-Profil umgeformten Verstärkungsbandes von Fig. 11;
- Fig. 14: eine Draufsicht auf ein Verstärkungsband gemäß einer fünften Ausführungsform;
- Fig. 15: eine Draufsicht auf ein Verstärkungsband gemäß einer sechsten Ausführungsform; und
- Fig. 16: eine perspektivische Darstellung eines Dichtungsstranges mit dem zu einem U-Profil umgeformten Verstärkungsband von Fig. 15.

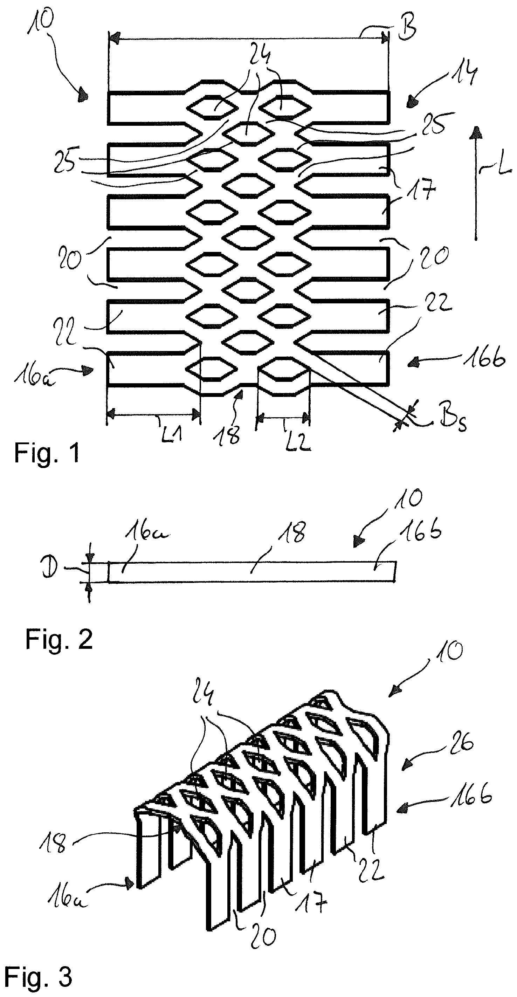

In Fig. 1 ist ein Verstärkungsband 10 gezeigt, das zur Armierung eines in Fig. 3 dargestellten Formkörpers 11 dient. Der Formkörper 11 ist vorliegend ein Dichtungsstrang 12 für ein nicht dargestelltes Fahrzeug, der eine Dichtlippe 28 und einen Aufsteckschacht 30 aufweist.

Das Verstärkungsband 10 weist eine Breite B zwischen 15 mm und 60 mm, insbesondere zwischen 20 mm und 45 mm, und eine Dicke D zwischen 0,46 mm und 0,84 mm, insbesondere zwischen 0,5 mm und 0,8 mm, weiterhin insbesondere zwischen 0,57 mm und 0,77 mm.

Das Verstärkungsband 10 weist einen bandförmigen Grundkörper 14 auf, der aus einem ersten Randabschnitt 16a, einem zweiten Randabschnitt 16b und einem dazwischen angeordneten Innenabschnitt 18 gebildet ist.

Jeder der Randabschnitte 16a, 16b weist eine Vielzahl an Lamellen 17 auf, die von Randschlitzen 20 unterbrochen werden. Wie in Fig. 1 ersichtlich ist, erstrecken sich die Randschlitze 20 von einem Rand 22 des Grundkörpers 14 quer zur Längsrichtung L nach innen, wobei sich immer zwei Randschlitze 20 gegenüber liegen. Die Randschlitze 20 sind nach innen keilförmig ausgebildet.

In dem Innenabschnitt 18 sind Innenschlitze 24 eingebracht, die zu beiden Seiten hin keilförmig ausgebildet sind. Wie in Fig. 1 ersichtlich ist, ist abwechselnd in Längsrichtung L des Verstärkungsbandes zwischen zwei Randschlitzen 22 jeweils ein Innenschlitz 24 angeordnet und zwischen jeweils zwei aufeinanderfolgenden Paaren von Randschlitzen 20 sind zwei sich gegenüberliegende Innenschlitze 24 angeordnet. Die Randschlitze 20 weisen eine Länge L1 auf, die ca. ein Drittel der Breite B des Verstärkungsbandes 10 entspricht, und die Innenschlitze 24 weisen eine Länge L2 auf, die zwischen 1/8 und 2/3 der Breite B des Verstärkungsbandes 10 entspricht.

Die Randschlitze 20 und die Innenschlitze 24 werden durch rotatives Schneiden oder Stanzen des Grundkörpers 14 erzeugt und durch Recken, das heißt, durch Ziehen des Grundkörpers 14 in Längsrichtung L, beispielsweise mittels Walzstrecken, in die in Fig. 1 dargestellte Form aufgeweitet. Eine Öffnungsweite der Randschlitze 22 und der Innenschlitze 24 kann zwischen 1 mm und 4 mm betragen. Die Lamellen 17 können eine Breite zwischen 2,5 und 4,5 mm aufweisen.

Wie zudem in Fig. 1 ersichtlich ist, überlappen sich die Randschlitze 20 und die Innenschlitze 24 quer zur Längsrichtung L, wobei die überlappenden Randschlitze 20 und Innenschlitze 24 durch Stege 25 voneinander getrennt sind, die eine Breite zwischen 1 mm und 3 mm aufweisen.

Das Verstärkungsband 10 ist aus einer Aluminium-Magnesium-Legierung gemäß der Legierungsgruppe EN AW-5xxx. Der Magnesium-Anteil in der Legierung kann zwischen ca. 0,2 % und 5,6 % betragen. Zudem kann die Aluminium-Magnesium-Legierung noch weitere Bestandteile, wie beispielsweise Silizium (Si), Eisen (Fe), Kupfer (Cu), Mangan (Mn), Magnesium (Mg), Chrom (Cr), Titan (Ti) und/oder Zink (Zn), enthalten. Die Aluminium-Magnesium-Legierung des Verstärkungsbandes wird behandelt, beispielsweise gewalzt, geglüht und/oder wärmebehandelt, um die Festigkeit des Verstärkungsbandes 10 zu erhöhen. Dadurch weist der Grundkörper 14 in einem Zustand Hxy eine Zugfestigkeit auf, die größer ist als die Zugfestigkeit einer korrespondierenden Aluminium-Magnesium-Legierung gemäß der Legierungsgruppe EN AW-5xxx im gleichen Zustand Hxy. So kann die Zugfestigkeit der Aluminium-Magnesium-Legierung des Verstärkungsbandes 10 im Zustand Hxy bis zu 40 N/mm² höher sein als die Zugfestigkeit einer korrespondierenden Aluminium-Magnesium-Legierung gemäß der Legierungsgruppe EN AW-5xxx im ZustandHxy.

Beispielsweise weist ein behandelte Aluminium-Magnesium-Legierung EN AW-5754 im Werkstoffzustand H22 und mit einer Materialdicke von 0,8 mm eine Zugfestigkeit Rm von 271 bis 310 MPa und eine Streckgrenze Rp0,2 von min. 130 MPa und eine Bruchdehnung A50 von min. 8 % auf. Im Vergleich dazu weist eine Aluminium-Magnesium-Legierung EN AW-5754 im Werkstoffzustand H22 und mit einer Materialdicke von 0,8 mm nach EN 485-2 eine Zugfestigkeit Rm von 220 bis 270 MPa auf.

Beispielsweise weist eine behandelte Aluminium-Magnesium-Legierung EN AW-5454 im Werkstoffzustand 0/H111 und mit einer Materialdicke von 0,80 mm eine Zugfestigkeit Rm von 276 bis 305 MPa, eine Streckgrenze Rp0,2 von min. 85 MPa und eine Bruchdehnung A50 von min. 13% auf. Im Vergleich dazu weist eine Aluminium-Magnesium-Legierung EN AW-5454 im Werkstoffzustand 0/H111 und mit einer Materialdicke von 0,8 mm nach EN 485-2 eine Zugfestigkeit Rm von 215 bis 275 MPa auf.

Alternativ oder zusätzlich kann zur Erhöhung der Festigkeit des Verstärkungsbandes 10 der Grundkörper 14 in einem Zustand Hxy eine Streckgrenze aufweisen, die kleiner als die Streckgrenze einer korrespondierenden Aluminium-Magnesium-Legierung gemäß der Legierungsgruppe EN AW-5xxx im gleichen Zustand Hxy ist.

Beispielsweise weist ein behandelte Aluminium-Magnesium-Legierung EN AW-5754 im Werkstoffzustand H22 und einer Materialdicke von 0,6 mm eine Zugfestigkeit Rm von 220 bis 270 MPa und eine Streckgrenze Rp0,2 von 90 bis 129 MPa und eine Bruchdehnung A50 von min. 10 % auf. Im Vergleich dazu weist eine Aluminium-Magnesium-Legierung EN AW-5754 im Werkstoffzustand H22 und einer Materialdicke von 0,6 mm nach EN 485-2 eine Streckgrenze Rp02 von mindestens 130 MPa und eine Bruchdehnung A50 von min. 8% auf.

Durch die Erhöhung der Festigkeit des Verstärkungsbandes, indem die Zugfestigkeit der Aluminium-Magnesium-Legierung im Vergleich zu der Zugfestigkeit einer korrespondieren Aluminium-Magnesium-Legierung gemäß der Legierungsgruppe EN AW-5xxx erhöht ist und/oder die Streckgrenze der Aluminium-Magnesium-Legierung im Vergleich zu der Streckgrenze einer korrespondieren Aluminium-Magnesium-Legierung gemäß der Legierungsgruppe EN AW-5xxx verringert ist, kann das Verstärkungsband 10 weiter gereckt werden. Dadurch kann der Materialeinsatz minimiert und das Gewicht reduziert werden.

Zudem kann durch die Reduzierung der Streckgrenze beim behandelten Werkstoff der Mindestwert für die Bruchdehnung erhöht werden. Dadurch erhöht sich die Umformbarkeit des Verstärkungsbandes. Es kann beispielsweise weiter gereckt werden und ist dadurch stabiler in der Herstellung und bei der Weiterverarbeitung.

Somit kann die Zugfestigkeit und/oder die Streckgrenze einer Aluminium-Magnesium-Legierung gemäß der Legierungsgruppe EN AW-5xxx in einem Zustand Hxy im Vergleich zu der korrespondierenden Aluminium-Magnesium-Legierung gemäß der Legierungsgruppe EN AW-5xxx in dem gleichen Zustand Hxy erniedrigt und/oder erhöht werden, indem die Aluminium-Magnesium-Legierung gemäß der Legierungsgruppe EN AW-5xxx mit dem Zustand Hxy behandelt, insbesondere gewalzt, geglüht oder wärmebehandelt wird.

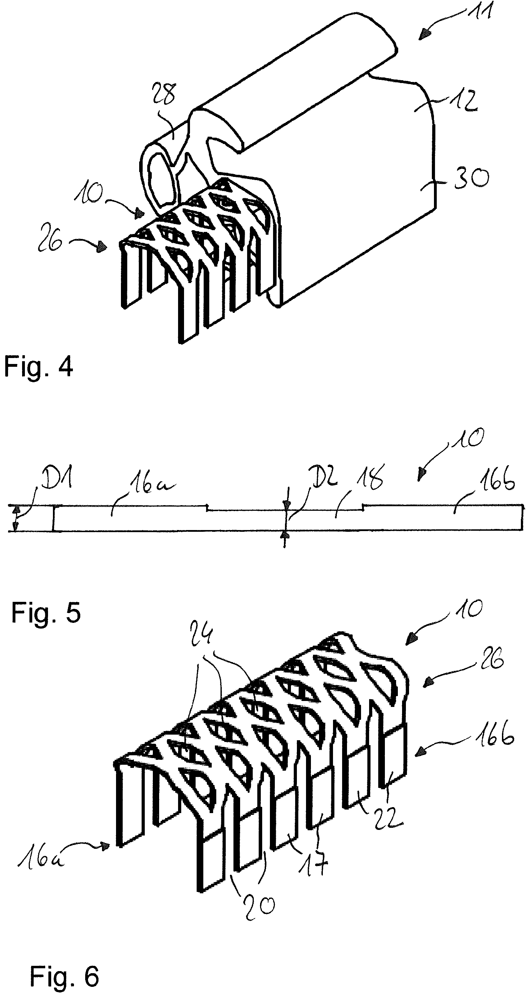

Zur Armierung des in Fig. 4 dargestellten Dichtungsstrangs 12 wird das Verstärkungsband 10 zu einem U-förmigen Profil 26 gebogen, wie dies in Fig. 3 dargestellt ist. Anschließend wird das U-Profil 26 in einem Extrusionsverfahren mit einem Kunststoff oder elastomeren Material umspritzt, so dass ein als Dichtungsstrang 12 ausgebildeter Formkörper 11 entsteht.

In den Figuren 5 bis 7 ist eine zweite Ausführungsform des Verstärkungsbands 10 gezeigt, die sich von der ersten Ausführungsform dadurch unterscheidet, dass eine Dicke D1 der Randabschnitte 16a, 16b, insbesondere der Ränder 22, größer als eine Dicke D2 des Innenabschnitts 18 ist. Dadurch wird eine Beschädigung des Formkörpers 11 vermieden.

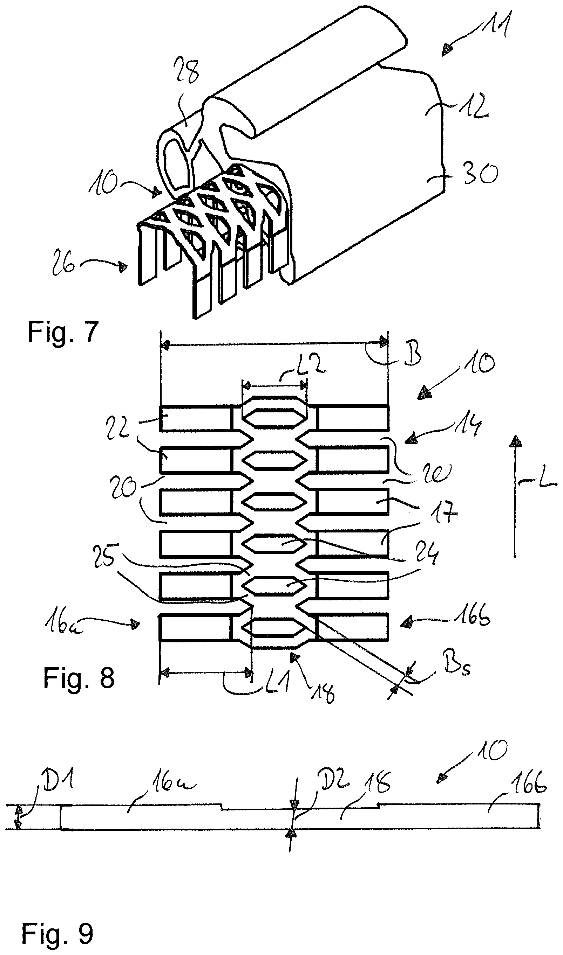

In den Figuren 8 bis 10 ist eine dritte Ausführungsform des Verstärkungsbandes 10 gezeigt, die sich von den anderen beiden Ausführungsformen durch die Anordnung der Randschlitze 20 und der Innenschlitze 24 unterscheidet.

Wie in Fig. 8 ersichtlich ist, sind abwechselnd in Längsrichtung L des Verstärkungsbandes 10 paarweise zwei Randschlitze 20 einander gegenüberliegend und in Längsrichtung L versetzt dazu ein Innenschlitz 24 in den Grundkörper 14 eingebracht.

Die Randschlitze 20 weisen eine Länge L1 auf, die ca. ein Drittel der Breite B des Verstärkungsbandes 10 entspricht, und die Innenschlitze 24 weisen eine Länge L2 auf, die zwischen 1/8 und 2/3 der Breite B des Verstärkungsbandes 10 entspricht.

Wie insbesondere in Fig. 9 ersichtlich ist, ist die Dicke D1 der Randabschnitte 16a, 16b des Verstärkungsbandes 10 der dritten Ausführungsform größer als die Dicke D2 des Innenabschnitts 18. In einer nicht dargestellten Ausführungsform kann das Verstärkungsband 10 der dritten Ausführungsform wie das Verstärkungsband 10 der ersten Ausführungsform eine quer zur Längsrichtung L gleichmäßige Dicke D aufweisen.

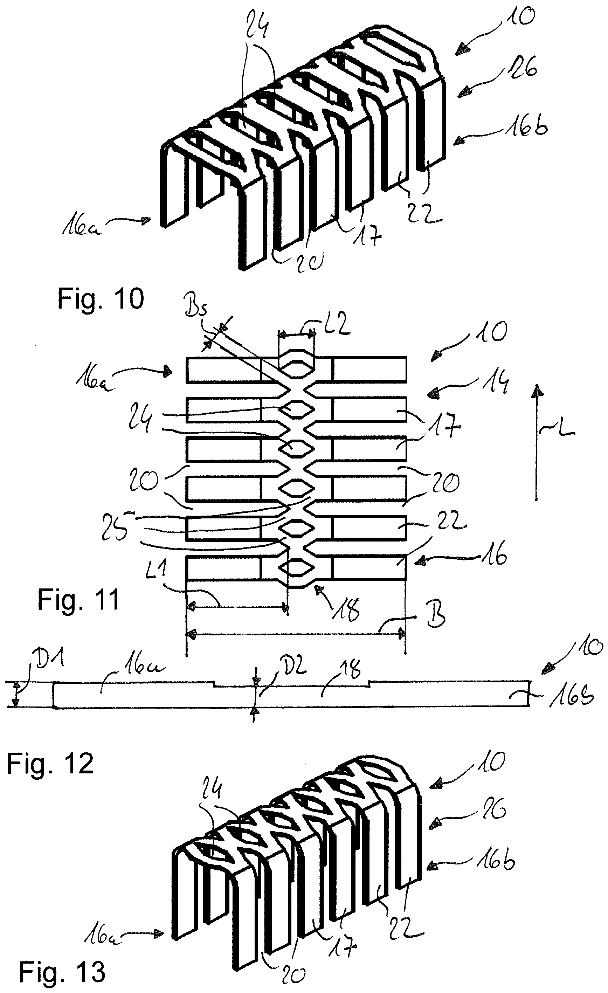

Das in Fig. 8 dargestellte Verstärkungsband 10 wird zu einem U-förmigen Profil 26 gebogen, wie dies in Fig. 10 dargestellt ist, und in einem Extrusionsverfahren mit einem Kunststoff oder elastomeren Material umspritzt, um einen Dichtungsstrang, wie dieser in den Figuren 4 und 7 gezeigt ist, zu erzeugen.

In den Figuren 11 bis 13 ist eine vierte Ausführungsform des Verstärkungsbandes 10 gezeigt, die sich von der dritten Ausführungsform in der Länge L1 der Randschlitze und der Länge L2 der Innenschlitze unterscheidet.

Ein Vergleich der Fig. 8 mit Fig. 11 veranschaulicht, dass bei der vierten Ausführungsform im Vergleich zu der dritten Ausführungsform die Länge L1 der Randschlitze 20 größer und die Länge L2 der Innenschlitze 24 kleiner ist.

Die Randschlitze 20 der vierten Ausführungsform weisen eine Länge L1 auf, die ca. der Hälfte der Breite B des Verstärkungsbandes 10 entspricht, und die Innenschlitze 24 weisen eine Länge L2 auf, die zwischen 1/8 und 2/3 der Breite B des Verstärkungsbandes 10 entspricht. Dadurch weist das zu einem U-förmigen Profil 26 gebogenene Verstärkungsband der vierten Ausführungsform im Vergleich zu dem U-förmigen Profil der dritten Ausführungsform eine größere Höhe bei einer gleichzeitig geringeren Breite auf.

Wie insbesondere in Fig. 12 ersichtlich ist, ist die Dicke D1 der Randabschnitte 16a, 16b des Verstärkungsbandes 10 der vierten Ausführungsform größer als die Dicke D2 des Innenabschnitts 18. In einer nicht dargestellten Ausführungsform kann das Verstärkungsband 10 der vierten Ausführungsform wie das Verstärkungsband 10 der ersten Ausführungsform eine quer zur Längsrichtung L gleichmäßige Dicke D aufweisen.

Das in Fig. 11 dargestellte Verstärkungsband 10 wird zu einem U-förmigen Profil 26 gebogen, wie dies in Fig. 13 dargestellt ist, und in einem Extrusionsverfahren mit einem Kunststoff oder elastomeren Material umspritzt, um einen Dichtungsstrang, wie dieser in den Figuren 4 und 7 gezeigt ist, zu erzeugen.

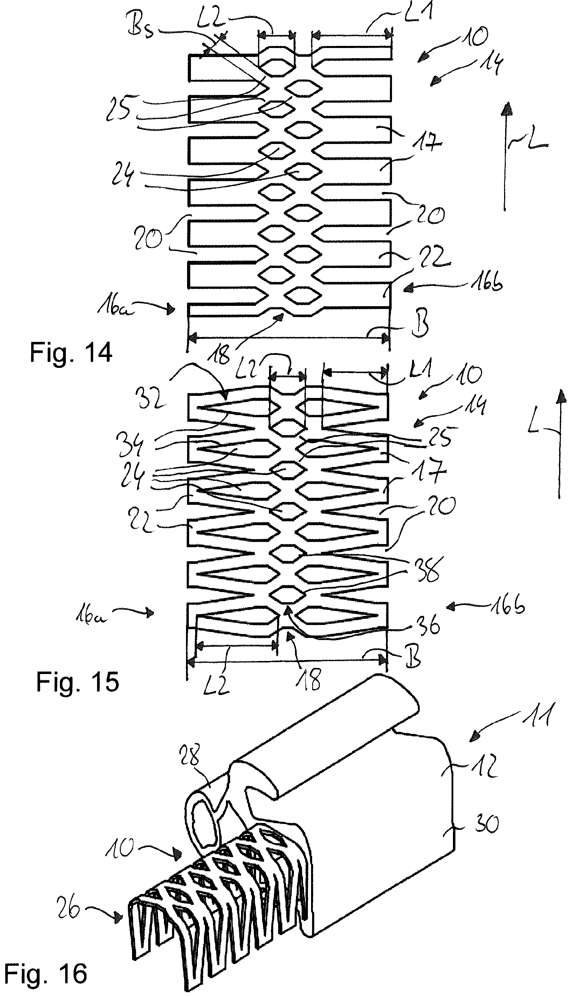

In Fig. 14 ist eine fünfte Ausführungsform des Verstärkungsbandes 10 gezeigt, die sich von den anderen Ausführungsformen durch die Anordnung der Randschlitze 20 und der Innenschlitze 24 unterscheidet.

Wie in Fig. 14 ersichtlich ist, sind sowohl die Randschlitze 20 als auch die Innenschlitze 24 in Längsrichtung L versetzt zueinander angeordnet. Insbesondere sind abwechselnd in Längsrichtung L des Verstärkungsbandes 10 ein Randschlitz 20 eines ersten Randabschnittes 16a und ein Innenschlitz 24 einander gegenüberliegend und in Längsrichtung L versetzt dazu ein Randschlitz 20 eines zweiten Randabschnittes 16b und ein Innenschlitz 24 einander gegenüberliegend angeordnet.

Die Randschlitze 20 der fünften Ausführungsform weisen eine Länge L1 auf, die ca. 1/3 der Breite B des Verstärkungsbandes 10 entspricht, und die Innenschlitze 24 weisen eine Länge L2 auf, die zwischen 1/8 und 2/3 der Breite B des Verstärkungsbandes 10 entspricht.

Bei der in Fig. 14 dargestellten fünften Ausführungsform des Verstärkungsbandes 10 können die Randabschnitte 16a, 16b eine Dicke D1 aufweisen, die, wie in den Figuren 5, 9 und 12 dargestellt ist, größer als die Dicke D2 des Innenabschnittes 18 ist, oder die, wie in Fig. 2 dargestellt ist, gleich der Dicke D2 des Innenabschnittes 18 ist.

Das in Fig. 14 dargestellte Verstärkungsband 10 wird zu einem U-förmigen Profil 26 gebogen, wie dies in den Figuren 4, 6, 10 und 13 dargestellt ist, und in einem Extrusionsverfahren mit einem Kunststoff oder elastomeren Material umspritzt, um einen Dichtungsstrang, wie dieser in den Figuren 4 und 7 gezeigt ist, zu erzeugen.

In den Figuren 15 und 16 ist eine sechste Ausführungsform des Verstärkungsbandes 10 gezeigt, die sich von den anderen Ausführungsformen in der Ausgestaltung der Randschlitze 20 und der Innenschlitze 24 unterscheidet.

Wie in Fig. 15 ersichtlich ist, sind die Randschlitze 20 V-förmig ausgebildet, indem die Randschlitze 20 spitz nach innen zulaufen.

Die Innenschlitze 24 sind aus zwei ersten Reihen 32 mit einer ersten Kontur 34 und aus einer zweiten Reihe 36 mit einer zweiten Kontur 36 gebildet, wobei die Innenschlitze 24 der ersten Reihe 32 länger sind als die Innenschlitze 24 der zweiten Reihe 36. Die erste Kontur 34 weist näherungsweise eine Tropfenform auf und die zweite Kontur 36 weist näherungsweise die Form eines Hexaeders auf.

Wie in Fig. 15 ersichtlich ist, ist abwechselnd in Längsrichtung L des Verstärkungsbandes 10 zwischen zwei Randschlitzen 22 jeweils ein Innenschlitz 24 der zweiten Reihe 36 angeordnet und zwischen jeweils zwei aufeinanderfolgenden Paaren von Randschlitzen 20 sind zwei sich gegenüberliegende Innenschlitze 24 der ersten Reihe 32 angeordnet.

Die Randschlitze 20 der sechsten Ausführungsform weisen eine Länge L1 auf, die ca. 1/3 der Breite B des Verstärkungsbandes 10 entspricht. Die Innenschlitze 24 der ersten Reihe 32 weisen eine Länge L2 auf, die ca. 1/3 der Breite B des Verstärkungsbandes 10 entspricht und die Innenschlitze 24 der zweiten Reihe 36 weisen eine Länge L2 auf, die ca. 1/8 der Breite B des Verstärkungsbandes 10 entspricht.

Bei der in Fig. 15 dargestellten sechsten Ausführungsform des Verstärkungsbandes 10 können die Randabschnitte 16a, 16b eine Dicke D1 aufweisen, die, wie in den Figuren 5, 9 und 12 dargestellt ist, größer als die Dicke D2 des Innenabschnittes 18 ist, oder die, wie in Fig. 2 dargestellt ist, gleich der Dicke D2 des Innenabschnittes 18 ist.

Das in Fig. 15 dargestellte Verstärkungsband 10 wird zu einem U-förmigen Profil 26 gebogen, wie dies in den Figuren 4, 6, 10 und 13 dargestellt ist, und in einem Extrusionsverfahren mit einem Kunststoff oder elastomeren Material umspritzt, um den in Fig. 16 dargestellten Dichtungsstrang 12 zu erzeugen.

Durch die Erhöhung und/oder Reduzierung der Streckgrenze und/oder der Zugfestigkeit der Aluminium-Magnesium-Legierung kann das Verstärkungsband 10 weiter gereckt werden, das heißt in die Länge gezogen werden. Dadurch kann der Materialeinsatz reduziert und gleichzeitig das Gewicht des Verstärkungsbandes 10 verringert werden.

### Bezugszeichenliste

- 10: Verstärkungsband
- 11: Formkörper
- 12: Dichtungsstrang
- 14: bandförmiger Grundkörper
- 16a: erster Randabschnitt
- 16b: zweiter Randabschnitt
- 17: Lamellen
- 18: Innenabschnitt
- 20: Randschlitz
- 22: Rand
- 24: Innenschlitz
- 25: Steg
- 26: U-Profil
- 28: Dichtlippe
- 30: Aufsteckschacht
- 32: erste Reihe
- 34: erste Kontur
- 36: zweite Reihe
- 38: zweite Kontur

- L: Längsrichtung
- B: Breite des Verstärkungsbandes
- D: Dicke des Verstärkungsbandes
- L1: Länge eines Randschlitzes
- L2: Länge eines Innenschlitzes
- Bs: Breite des Stegs
- D1: Dicke eines Randabschnittes
- D2: Dicke des Innenabschnittes

## Patentansprüche

1. Verstärkungsband (10) für einen Formkörper (11) aus einer spritzfähigen Formmasse, aufweisend einen bandförmigen Grundkörper (14) aus einer Aluminium-Magnesium-Legierung gemäß der Legierungsgruppe EN AW-5xxx, **dadurch gekennzeichnet, dass** die Aluminium-Magnesium-Legierung des bandförmigen Grundkörpers (14) eine Streckgrenze und/oder eine Zugfestigkeit aufweist, die höher und/oder niedriger als die Streckgrenze und/oder die Zugfestigkeit einer korrespondierenden Aluminium-Magnesium-Legierung gemäß der Legierungsgruppe EN AW-5xxx ist.

2. Verstärkungsband (10) nach Anspruch 1, **dadurch gekennzeichnet, dass** die Streckgrenze und/oder die Zugfestigkeit der Aluminium-Magnesium-Legierung des bandförmigen Grundkörpers (14) zwischen 5% und 50% höher und/oder niedriger als die Streckgrenze und/oder die Zugfestigkeit einer korrespondierenden Aluminium-Magnesium-Legierung gemäß der Legierungsgruppe EN AW-5xxx ist.

3. Verstärkungsband (10) nach Anspruch 1 oder 2, **dadurch gekennzeichnet, dass** die Aluminium-Magnesium-Legierung des Grundkörpers (14) in einem Zustand Hxy eine höhere Zugfestigkeit als eine korrespondierende Aluminium-Magnesium-Legierung gemäß der Legierungsgruppe EN AW-5xxx im Zustand Hxy aufweist.

4. Verstärkungsband (10) nach einem der vorhergehenden Ansprüche, **dadurch gekennzeichnet, dass** die Aluminium-Magnesium-Legierung des Grundkörpers (14) in einem Zustand Hxy eine niedrigere Streckgrenze als eine korrespondierende Aluminium-Magnesium-Legierung gemäß der Legierungsgruppe EN AW-5xxx im Zustand Hxy aufweist.

5. Verstärkungsband (10) nach einem der vorhergehenden Ansprüche, **dadurch gekennzeichnet, dass** die Aluminium-Magnesium-Legierung geglüht oder wärmebehandelt ist.

6. Verstärkungsband (10) nach einem der vorhergehenden Ansprüche, **dadurch gekennzeichnet, dass** der Grundkörper (14) eine Dicke (D) zwischen 0,46 mm und 0,84 mm, insbesondere zwischen 0,5 mm und 0,8 mm, weiterhin insbesondere zwischen 0,57 mm und 0,77 mm, aufweist.

7. Verstärkungsband (10) nach einem der vorhergehenden Ansprüche, **dadurch gekennzeichnet, dass** der Grundkörper (14) eine Vielzahl an aufgeweiteten Randschlitzen (20), die sich von Randabschnitten (16a, 16b) des Grundkörpers (14) quer zu seiner Längsrichtung (L) nach innen erstrecken, und eine Vielzahl an aufgeweiteten Innenschlitzen (24), die in einem zwischen den Randabschnitten (16a, 16b) des Grundkörpers (14) befindlichen Innenabschnitt (18) angeordnet sind, aufweist.

8. Verstärkungsband (10) nach Anspruch 7, **dadurch gekennzeichnet, dass** eine Öffnungsweite der Randschlitze (20) und/oder der Innenschlitze (24) zwischen 0,5 mm und 4 mm beträgt.

9. Verstärkungsband nach Anspruch 7 oder 8, **dadurch gekennzeichnet, dass** die Randschlitze (20) eine Länge (L1) aufweisen, die zwischen einem Drittel und der Hälfte einer Breite (B) des Verstärkungsbandes (10) entspricht, und die Innenschlitze (24) weisen eine Länge (L2) auf, die zwischen 1/8 und 2/3 der Breite (B) des Verstärkungsbandes (10) entspricht.

10. Verstärkungsband (10) nach einem der Ansprüche 7 bis 9, **dadurch gekennzeichnet, dass** die Innenschlitze (24) aus wenigstens einer ersten Reihe (32) mit einer ersten Kontur (34) und aus wenigstens einer zweiten Reihe (36) mit einer zweiten Kontur (38) gebildet sind.

11. Verstärkungsband (10) nach einem der Ansprüche 7 bis 10, **dadurch gekennzeichnet, dass** sich die Randschlitze (20) und die Innenschlitze (24) quer zur Längsrichtung (L) überlappen, wobei die überlappenden Randschlitze (20) und Innenschlitze (24) durch Stege (25) voneinander getrennt sind, wobei die Stege (25) eine Breite (Bs) zwischen 1 mm und 3 mm aufweisen.

12. Verstärkungsband (10) nach einem der Ansprüche 7 bis 11, **dadurch gekennzeichnet, dass** abwechselnd in Längsrichtung (L) des Verstärkungsbandes (10) zwei Randschlitze (20) einander gegenüberliegend und in Längsrichtung (L) versetzt dazu ein Innenschlitz (24) angeordnet sind, oder dass abwechselnd in Längsrichtung (L) des Verstärkungsbandes (10) ein Randschlitz (20) eines ersten Randabschnittes (16a) und ein Innenschlitz (24) einander gegenüberliegend und in Längsrichtung (L) versetzt dazu ein Randschlitz (20) eines zweiten Randabschnittes (16b) und ein Innenschlitz (24) einander gegenüberliegend angeordnet sind, oder dass abwechselnd in Längsrichtung (L) des Verstärkungsbandes (10) zwischen zwei sich paarweise gegenüberliegenden Randschlitzen (20) ein Innenschlitz (24) und in Längsrichtung (L) versetzt dazu zwei sich gegenüberliegende Innenschlitze (24) angeordnet sind.

13. Verstärkungsband (10) nach einem der vorhergehenden Ansprüche, **dadurch gekennzeichnet, dass** eine Dicke (D1) der Randabschnitte (16) größer als eine Dicke (D2) des Innenabschnittes (18) ist.

14. Formkörper (11) aus einer spritzfähigen Formmasse, aufweisend ein Verstärkungsband (10) nach einem der Ansprüche 1 bis 13.

15. Formkörper (11) nach Anspruch 14, **dadurch gekennzeichnet, dass** das Verstärkungsband (10) zu einem V-förmigen Profil oder einem U-Förmigen Profil umgeformt ist, und/oder dass der Formkörper (11) ein Dichtungsstrang (12) für ein Fahrzeug ist.

## Claims

1. A reinforcing strip (10) for a moulded body (11) made of an injectable moulding compound, comprising a strip-shaped base body (14) made of an aluminium-magnesium alloy according to the alloy group EN AW-5xxx, **characterized in that** the aluminium-magnesium alloy of the strip-shaped base body (14) has a yield strength and/or a tensile strength which is higher and/or lower than the yield strength and/or the tensile strength of a corresponding aluminium-magnesium alloy according to the alloy group EN AW-5xxx.

2. The reinforcing strip (10) according to claim 1, **characterized in that** the yield strength and/or the tensile strength of the aluminium-magnesium alloy of the strip-shaped base body (14) is between 5% and 50% higher and/or lower than the yield strength and/or the tensile strength of a corresponding aluminium-magnesium alloy according to the alloy group EN AW-5xxx.

3. The reinforcing strip (10) according to claim 1 or 2, **characterized in that** the aluminium-magnesium alloy of the base body (14) in a state Hxy has a higher tensile strength than a corresponding aluminium-magnesium alloy according to the alloy group EN AW-5xxx in the state Hxy.

4. The reinforcing strip (10) according to one of the preceding claims, **characterized in that** the aluminium-magnesium alloy of the base body (14) in a state Hxy has a lower yield strength than a corresponding aluminium-magnesium alloy according to the alloy group EN AW-5xxx in the state Hxy.

5. The reinforcing strip (10) according to one of the preceding claims, **characterized in that** the aluminium-magnesium alloy is annealed or heat-treated.

6. The reinforcing strip (10) according to one of the preceding claims, **characterized in that** the base body (14) has a thickness (D) of between 0.46 mm and 0.84 mm, in particular between 0.5 mm and 0.8 mm, furthermore in particular between 0.57 mm and 0.77 mm.

7. The reinforcing strip (10) according to one of the preceding claims, **characterized in that** the base body (14) has a plurality of widened edge slits (20) which extend inwards from edge sections (16a, 16b) of the base body (14) transversely to its longitudinal direction (L), and a plurality of widened inner slits (24) which are arranged in an inner portion (18) located between the edge sections (16a, 16b) of the base body (14).

8. The reinforcing strip (10) according to claim 7, **characterized in that** an opening width of the edge slits (20) and/or the inner slits (24) is between 0.5 mm and 4 mm.

9. The reinforcing strip (10) according to claim 7 or 8, **characterized in that** the edge slits (20) have a length (L1) which corresponds to between one third and one half of a width (B) of the reinforcing strip (10), and the inner slits (24) have a length (L2) which corresponds to between 1/8 and 2/3 of the width (B) of the reinforcing strip (10).

10. The reinforcing strip (10) according to one of claims 7 to 9, **characterized in that** the inner slits (24) are formed from at least one first row (32) with a first contour (34) and from at least one second row (36) with a second contour (38).

11. The reinforcing strip (10) according to one of claims 7 to 10, **characterized in that** the edge slits (20) and the inner slits (24) overlap transversely to the longitudinal direction (L), the overlapping edge slits (20) and inner slits (24) being separated from one another by webs (25), the webs (25) having a width (Bs) of between 1 mm and 3 mm.

12. The reinforcing strip (10) according to one of claims 7 to 11, **characterized in that** two edge slits (20) are arranged alternately opposite one another in the longitudinal direction (L) of the reinforcing strip (10) and an inner slit (24) is arranged offset thereto in the longitudinal direction (L), or **in that** an edge slit (20) of a first edge section (16a) and an inner slit (24) are arranged alternately opposite one another in the longitudinal direction (L) of the reinforcing strip (10) and an edge slit (20) of a second edge section (16b) and an inner slit (24) are arranged opposite one another offset thereto in the longitudinal direction (L), or **in that** an inner slit (24) is arranged alternately in the longitudinal direction (L) of the reinforcing strip (10) between two edge slits (20) lying opposite one another in pairs and two inner slits (24) lying opposite one another offset thereto in the longitudinal direction (L).

13. The reinforcing strip (10) according to one of the preceding claims, **characterized in that** a thickness (D1) of the edge sections (16) is greater than a thickness (D2) of the inner portion (18).

14. A moulded body (11) made of an injectable molding compound, comprising a reinforcing strip (10) according to one of claims 1 to 13.

15. The moulded body (11) according to claim 14, **characterized in that** the reinforcing strip (10) is formed into a V-shaped profile or a U-shaped profile, and/or **in that** the moulded body (11) is a sealing strip (12) for a vehicle.

## Revendications

1. Une bande de renforcement (10) pour un corps moulé (11) à partir d'une masse de moulage injectable, présentant un corps de base (14) en forme de bande en un alliage aluminium-magnésium selon le groupe d'alliages EN AW-5xxx, **caractérisée en ce que** l'alliage aluminium-magnésium du corps de base (14) en forme de bande présente une limite d'élasticité et/ou une résistance à la traction qui est supérieure et/ou inférieure à la limite d'élasticité et/ou à la résistance à la traction d'un alliage aluminium-magnésium correspondant selon le groupe d'alliages EN AW-5xxx.

2. La bande de renforcement (10) selon la revendication 1, **caractérisée en ce que** la limite d'élasticité et/ou la résistance à la traction de l'alliage aluminium-magnésium du corps de base (14) en forme de bande est supérieure et/ou inférieure entre 5% et 50% à la limite d'élasticité et/ou à la résistance à la traction d'un alliage aluminium-magnésium correspondant selon le groupe d'alliages EN AW-5xxx.

3. La bande de renforcement (10) selon la revendication 1 ou 2, **caractérisée en ce que** l'alliage aluminium-magnésium du corps de base (14) présente, dans un état Hxy, une résistance à la traction supérieure à celle d'un alliage aluminium-magnésium correspondant selon le groupe d'alliages EN AW-5xxx dans l'état Hxy.

4. La bande de renforcement (10) selon l'une quelconque des revendications précédentes, **caractérisée en ce que** l'alliage aluminium-magnésium du corps de base (14) présente, dans un état Hxy, une limite d'élasticité inférieure à celle d'un alliage aluminium-magnésium correspondant selon le groupe d'alliages EN AW-5xxx dans l'état Hxy.

5. La bande de renforcement(10) selon l'une quelconque des revendications précédentes, **caractérisée en ce que** l'alliage aluminium-magnésium est recuit ou traité thermiquement.

6. La bande de renforcement(10) selon l'une quelconque des revendications précédentes, **caractérisée en ce que** le corps de base (14) présente une épaisseur (D) comprise entre 0,46 mm et 0,84 mm, notamment entre 0,5 mm et 0,8 mm, en particulier encore entre 0,57 mm et 0,77 mm.

7. La bande de renforcement (10) selon l'une quelconque des revendications précédentes, **caractérisée en ce que** le corps de base (14) comprend une pluralité de fentes de bord évasées (20) s'étendant vers l'intérieur à partir de section de bord (16a, 16b) du corps de base (14) transversalement à sa direction longitudinale (L), et une pluralité de fentes intérieures évasées (24) disposées dans une partie intérieure (18) située entre les sections de bord (16a, 16b) du corps de base (14).

8. La bande de renforcement (10) selon la revendication 7, **caractérisée en ce qu'**une largeur d'ouverture des fentes de bord (20) et/ou des fentes intérieures (24) est comprise entre 0,5 mm et 4 mm.

9. La bande de renforcement (10) selon la revendication 7 ou 8, **caractérisée en ce que** les fentes de bord (20) ont une longueur (L1) qui correspond entre un tiers et la moitié d'une largeur (B) de la bande de renforcement (10), et les fentes intérieures (24) ont une longueur (L2) qui correspond entre 1/8 et 2/3 de la largeur (B) de la bande de renforcement (10).

10. La bande de renforcement(10) selon l'une des revendications 7 à 9, **caractérisée en ce que** les fentes intérieures (24) sont formées d'au moins une première rangée (32) ayant un premier contour (34) et d'au moins une deuxième rangée (36) ayant un deuxième contour (38).

11. La bande de renforcement (10) selon l'une des revendications 7 à 10, **caractérisée en ce que** les fentes de bord (20) et les fentes intérieures (24) se chevauchent transversalement à la direction longitudinale (L), les fentes de bord (20) et les fentes intérieures (24) qui se chevauchent étant séparées les unes des autres par des entretoises (25), les entretoises (25) présentant une largeur (Bs) comprise entre 1 mm et 3 mm.

12. La bande de renforcement (10) selon l'une des revendications 7 à 11, **caractérisée en ce que** deux fentes de bord (20) sont disposées en alternance dans la direction longitudinale (L) de la bande de renforcement (10), en étant opposées l'une à l'autre, et une fente intérieure (24) est disposée décalée par rapport à ces fentes dans la direction longitudinale (L), ou **en ce que**, alternativement dans la direction longitudinale (L) de la bande de renforcement (10), une fente de bord (20) d'une première section de bord (16a) et une fente intérieure (24) sont disposées en face l'une de l'autre et, décalées par rapport à celles-ci dans la direction longitudinale (L), une fente de bord (20) d'une deuxième section de bord (16b) et une fente intérieure (24) sont disposées en face l'une de l'autre, ou **en ce que**, alternativement dans la direction longitudinale (L) de la bande de renforcement (10), une fente intérieure (24) est disposée entre deux fentes de bord (20) opposées par paires et, décalées par rapport à celles-ci dans la direction longitudinale (L), deux fentes intérieures (24) opposées.

13. La bande de renforcement (10) selon l'une quelconque des revendications précédentes, **caractérisée en ce qu'**une épaisseur (D1) des portions de bord (16) est supérieure à une épaisseur (D2) de la partie intérieure (18).

14. Un corps moulé (11) constitué d'une masse à mouler pouvant être injectée, présentant une bande de renforcement (10) selon l'une des revendications 1 à 13.

15. Le corps moulé (11) selon la revendication 14, **caractérisé en ce que** la bande de renforcement (10) est transformée en un profilé en forme de V ou en un profilé en forme de U, et/ou **en ce que** le corps moulé (11) est un cordon d'étanchéité (12) pour un véhicule.
